# EUROPÄISCHE PATENTANMELDUNG

(11) **EP 4 683 066 A2**
(43) Veröffentlichungstag der Anmeldung: **21.01.2026**
(21) Anmeldenummer: 25189622.1
(22) Anmeldetag: 15.07.2025
(51) Int. Cl.: H01M 50/209, H01M 50/503

(54) **RAHMENLOSES ZELLKONTAKTIERSYSTEM**

(30) Priorität: 15.07.2024 DE 102024120004
(71) Anmelder: LEONI Bordnetz-Systeme GmbH, 97318 Kitzingen (DE); LEONI Wiring Systems Slovakia spol. s r.o., 911 01 Trencin (SK)
(72) Erfinder: PEREZ LAZCANO, Fernando, 97204 Höchberg (DE); MARKERT, Jonathan, 97234 Reichenberg (DE); SMOLAN, Peter, 91101 Trencin (SK)
(74) Vertreter: Frenkel, Matthias Alexander

(57) **Zusammenfassung**

Es werden ein Zellkontaktiersystem für eine Batterie mit mehreren Zellen sowie ein Batteriesystem mit einem solchen Zellkontaktiersystem vorgeschlagen. Ein Ausführungsbeispiel des Zellkontaktiersystem (1) weist auf: eine Vielzahl von Zellverbinderelementen (100), wobei jedes der Vielzahl von Zellverbinderelementen (100) zumindest einen Kontaktierungsbereich (200) aufweist; und eine Vielzahl von Halterungselementen (10), wobei die Vielzahl von Halterungselementen (10) jeweils aufweist: eine erste Verbindungsanordnung (12), die jeweils ausgebildet ist, ein zugehöriges Halterungselement (10) der Vielzahl von Halterungselementen (10) mit einem zugehörigen Zellverbinderelement (100) der Vielzahl von Zellverbinderelementen (100) zu verbinden, und eine zweite Verbindungsanordnung (14), die jeweils ausgebildet ist, das zugehörige Halterungselement (10) der Vielzahl von Halterungselementen (10) mit mindestens einer Leitung (20) zu verbinden.

## Beschreibung

Die vorliegende Erfindung betrifft im Allgemeinen ein Zellkontaktiersystem und ein Batteriesystem. Im Speziellen bezieht sich die vorliegende Erfindung auf ein Zellkontaktiersystem für eine Batterie mit mehreren Zellen sowie auf ein Batteriesystem mit einem solchen Zellkontaktiersystem.

Zellkontaktiersysteme für Fahrzeuge, insbesondere Hochvoltfahrzeuge, weisen üblicherweise Trägerrahmen, Zellverbinder, Sensorleiter und eine separate Abdeckung für den Berührungsschutz auf. Der/die Trägerrahmen ist/sind normalerweise aus Kunststoff gebildet. In den Trägerrahmen (Halterrahmen) sind Öffnungen für die optische Inspektion, eine Niederhaltegeometrie sowie für Schweißfreigänge (in der Regel Laserschweißverfahren) integriert. Über die optische Inspektion kann geprüft werden, ob beispielsweise die Zellverbinder zentriert sind. Aufgrund der Größe der Öffnungen ist es vorteilhaft, nach dem Schweißverfahren eine Abdeckung für den Berührungsschutz vorzusehen.

Die Trägerrahmen / Halterahmen sind meist so groß/lang/breit wie ein Modul/Pack/Stack der Batterie. Je größer das/der Modul/Pack/Stack ist, umso größer sind normalerweise die Toleranzen für zwei entfernte Zellverbinder-Steckplätze innerhalb eines (Kunststoff-)Halterahmens. Solche bekannte Trägerrahmen / Halterahmen decken somit nur eine Variante eines Moduls/Stacks/Packs ab. Für weitere Varianten sind neue Trägerrahmen / Halterahmen notwendig. Dies ist unflexibel und führt zu einem Mehraufwand, insbesondere in Form zusätzlicher Spritzguss-Werkzeuge.

Die DE 10 2013 2218 72 A1 betrifft einen Verbinder zur Verbindung von zellenförmigen elektrischen Elementen. Beschrieben wird ein bandförmiger Verbinder zur Verbindung von zellenförmigen elektrischen Elementen, aus einem bandförmigen Trägerelement und einem bandförmigen Halteelement, wobei mindestens ein Kontaktelement zwischen dem Trägerelement und dem Halteelement angeordnet ist.

Die DE 10 2013 220 044 A1 bezieht sich auf ein Zellkontaktierungssystem für eine elektrochemische Vorrichtung, die mehrere elektrochemische Zellen umfasst. Das Zellkontaktierungssystem umfasst ein Stromleitungssystem mit einem oder mehreren Stromleitern zum elektrisch leitenden Verbinden von Zellterminals verschiedener elektrochemischer Zellen miteinander oder zum elektrisch leitenden Verbinden eines Zellterminals einer elektrochemischen Zelle mit einem Stromanschluss des Zellkontaktierungssystems und ein Signalleitungssystem mit einem oder mehreren Signalleitern zum elektrisch leitenden Verbinden mindestens einer Signalquelle mit einem Signalleitungsanschluss oder mit einer Überwachungsvorrichtung des Zellkontaktierungssystems. Das Zellkontaktierungssystem umfasst ein Laminat aus mehreren Lagen. Das Laminat umfasst mindestens eine Stromleiter-Lage, welche einen oder mehrere Stromleiter des Stromleitungssystems umfasst, und mindestens eine Signalleiter-Lage, welche einen oder mehrere Signalleiter des Signalleitungssystems umfasst.

Es besteht ein Bedarf nach einem verbesserten Zellkontaktiersystem und einem verbesserten Batteriesystem mit einem solchen Zellkontaktiersystem. Insbesondere besteht ein Bedarf an einem einfach aufgebauten und/oder flexibel anpassbaren Zellkontaktiersystem.

Gemäß einem ersten Aspekt wird ein Zellkontaktiersystem für eine Batterie mit mehreren Zellen bereitgestellt. Das Zellkontaktiersystem weist eine Vielzahl von Zellverbinderelementen auf. Jedes der Vielzahl von Zellverbinderelementen weist zumindest einen Kontaktierungsbereich auf. Das Zellkontaktiersystem weist ferner eine Vielzahl von Halterungselementen auf. Die Vielzahl von Halterungselementen weist jeweils eine erste Verbindungsanordnung auf. Die erste Verbindungsanordnung ist jeweils ausgebildet, ein zugehöriges Halterungselement der Vielzahl von Halterungselementen mit einem zugehörigen Zellverbinderelement der Vielzahl von Zellverbinderelementen zu verbinden. Die Vielzahl von Halterungselementen weist jeweils eine zweite Verbindungsanordnung auf. Die zweite Verbindungsanordnung ist jeweils ausgebildet, das zugehörige Halterungselement der Vielzahl von Halterungselementen mit mindestens einer Leitung zu verbinden.

Das Zellkontaktiersystem kann auch als Zellkontakierungssystem oder als Zellkontaktiereinheit bezeichnet werden. Der mindestens eine Kontaktierungsbereich kann mindestens ein Kontaktelement oder Kontaktierungselement aufweisen oder als mindestens ein Kontaktelement oder Kontaktierungselement ausgebildet sein. Die mindestens eine Leitung kann ein Leitungsbündel aufweisen oder als ein Leitungsbündel ausgebildet sein. Die mindestens eine Leitung kann mindestens eine Steuerleitung und/oder mindestens eine Sensorleitung aufweisen oder aus mindestens einer Steuerleitung und/oder mindestens einer Sensorleitung gebildet sein. Die mindestens eine Leitung kann einen Kabelsatz bilden, der im Fall von Sensorleitungen als Sensor-Kabelsatz bezeichnet werden kann. Der Kabelsatz kann eine Vielzahl von Steuerleitungen und/oder Sensorleitungen aufweisen, welche jeweils zu einem Sensor, beispielsweise Temperatursensor, Spannungssensor usw. führen können. Die Sensoren können in einem endmontierten Zustand über den Kabelsatz insbesondere an einem Batteriemanagementsystem angeschlossen sein, über das eine Batterie und/oder einzelne Zellen einer Batterie überwacht werden können. Unabhängig von der Ausgestaltung der mindestens einen Leitung können alle Zellverbinderelemente über die zweite Verbindungsanordnung der zugehörigen Halterungselemente mit einer gleichen Leitung, insbesondere einem gleichen Leitungsbündel, verbunden sein/werden.

Die erste Verbindungsanordnung kann jeweils ausgebildet sein, ein zugehöriges Halterungselement der Vielzahl von Halterungselementen mit einem zugehörigen Zellverbinderelement der Vielzahl von Zellverbinderelementen lösbar zu verbinden. Beispielsweise kann die erste Verbindungsanordnung jeweils ausgebildet sein, das zugehörige Halterungselement der Vielzahl von Halterungselementen mit dem zugehörigen Zellverbinderelement der Vielzahl von Zellverbinderelementen lösbar zu verbinden.

Zusätzlich oder alternativ kann die zweite Verbindungsanordnung jeweils ausgebildet sein, ein zugehöriges Halterungselement der Vielzahl von Halterungselementen mit mindestens einer Leitung lösbar zu verbinden. Beispielsweise kann die zweite Verbindungsanordnung jeweils ausgebildet sein, das zugehörige Halterungselement der Vielzahl von Halterungselementen mit der mindestens einen Leitung lösbar zu verbinden.

Unter einer lösbaren Verbindung kann insbesondere verstanden werden, dass die lösbare Verbindung und/oder über die lösbare Verbindung verbundene Elemente oder Komponenten mit normalem Kraftaufwand und/oder zerstörungsfrei gelöst werden kann/können. Lösbare Verbindungen können sozusagen ohne Beschädigung und/oder Zerstörung der verbundenen Bauteile getrennt und erneut fixiert werden. Lösbare Verbindungen umfassen Bauelemente/Bauteile, die ohne Zerstörung der verbundenen Bauelemente/Bauteile und mindestens eines Verbindungselements getrennt und wieder zusammengefügt werden können.

Über die erste Verbindungsanordnung können Zellverbinderelemente flexibel mit einem gleichartigen und/oder zumindest teilweise unterschiedlichen Halterungselement verbunden werden. Über die zweite Verbindungsanordnung können die Halterungselemente und somit die Zellverbinderelemente flexibel und/oder modular mit der mindestens einen Leitung verbunden werden. Auf diese Weise können Zellverbinderelemente flexibel und/oder modular entlang mindestens einer Leitung aneinandergereiht werden.

Der zumindest eine Kontaktierungsbereich, beispielsweise die Kontaktierungsbereiche oder die Kontaktelemente, kann mit Polen von Zellen einer Batterie (Batteriezellen) verbunden sein/werden. Ein Abschnitt des Kontaktierungsbereichs kann mit einem Pluspol einer Zelle und ein Abschnitt des Kontaktierungsbereichs kann mit einem Minuspol einer benachbarten Zelle verbunden sein/werden. Beispielsweise kann ein Kontaktierungsbereich/Kontaktelement eines Zellverbinderelements mit einem Pluspol einer Zelle und ein Kontaktierungsbereich/Kontaktelement des gleichen Zellverbinderelements kann mit einem Minuspol einer benachbarten Zelle verbunden sein/werden. Auf diese Weise können mittels des Zellkontaktiersystems mehrere nebeneinanderliegende Zellen miteinander verbunden oder verschaltetet werden. Beispielsweise können nebeneinanderliegende Zellen parallel oder in Reihe zueinander verschaltet werden. Gemäß einer Ausgestaltung kann mindestens ein Zellstapel mit jeweils mehreren Zellen in einer Längsrichtung / Längserstreckung des Zellkontaktiersystems angeordnet sein. Die Zellen des Zellstapels können durch das Zellkontaktiersystem miteinander verbunden sein/werden. Auf diese Weise können mittels des Zellkontaktiersystems mehrere nebeneinanderliegende Zellen eines Zellstapels miteinander verbunden oder verschaltetet werden.

Anders ausgedrückt, die Zellverbinderelemente können zum Verbinden eines ersten Zellterminals/Zellanschlusses/Zellpols einer ersten Zelle mit einem zweiten Zellterminal/Zellanschluss/Zellpol einer zweiten Zelle ausgebildet sein. Dabei kann das Zellverbinderelement einen ersten Kontaktbereich als Kontaktelement zum Verbinden mit dem ersten Zellterminal/Zellanschluss/Zellpol und einen zweiten Kontaktbereich als Kontaktelement zum Verbinden mit dem zweiten Zellterminal/Zellanschluss/Zellpol aufweisen. Durch die Verbindung der Zellverbinderelemente mit den Zellen kann eine gewünschte Spannung und ein gewünschter Strom von und/oder zu den Zellen bereitgestellt werden. Die Zellverbinderelemente können in einer Längsrichtung beispielsweise modular aneinandergereiht werden. Durch einfaches Weglassen oder Hinzufügen von einem oder mehreren Zellverbinderelementen kann eine Länge des Zellkontaktiersystems angepasst werden. Auf diese Weise kann eine Länge des Zellkontaktiersystems an eine erforderliche Länge eines Zellstapels angepasst werden. Beispielsweise kann eine Länge des Zellkontaktiersystems zumindest nahezu genau einer Länge des Zellstapels entsprechen.

Die erste Verbindungsanordnung kann jeweils ausgebildet sein, auf das zugehörige Zellverbinderelement aufgebracht oder an dem zugehörigen Zellverbinderelement angebracht zu werden. Beispielsweise kann die erste Verbindungsanordnung jeweils an dem zugehörigen Zellverbinderelement kraftschlüssig, formschlüssig und/oder stoffschlüssig angebracht werden, beispielsweise auf das zugehörige Zellverbinderelement gesteckt oder geklippst oder mit dem zugehörigen Zellverbinderelement heißverstemmt werden.

Die erste Verbindungsanordnung kann jeweils ausgebildet sein, das zugehörige Halterungselement der Vielzahl von Halterungselementen mit einer ersten Seite des zugehörigen Zellverbinderelements der Vielzahl von Zellverbinderelementen lösbar zu verbinden. Diese Seite kann einer zweiten Seite gegenüberliegen, auf welcher beispielsweise der zumindest eine Kontaktierungsbereich, beispielsweise die zwei Kontaktelemente, des zugehörigen Zellverbinderelements angeordnet sein können.

Die zweite Verbindungsanordnung kann einen Haltearm und/oder einen Haltehaken aufweisen. Beispielsweise kann der Haltearm und/oder Haltehaken mit der mindestens einen Leitung insbesondere lösbar verbunden sein/werden. Die zweite Verbindungsanordnung kann jeweils ausgebildet sein, zur Verbindung des zugehörigen Halterungselements mit der mindestens einen Leitung das zugehörige Halterungselement in die mindestens eine Leitung einzuhängen oder einzufädeln. Die zweite Verbindungsanordnung kann jeweils ausgebildet sein, zur Verbindung des zugehörigen Halterungselements mit der mindestens einen Leitung das zugehörige Halterungselement auf die mindestens eine Leitung aufzuhängen oder aufzuklippsen oder aufzuklemmen. Die zweite Verbindungsanordnung kann jeweils ausgebildet sein, zur Verbindung des zugehörigen Halterungselements mit der mindestens einen Leitung das zugehörige Halterungselement an die mindestens eine Leitung zu hängen oder an der mindestens einen Leitung festzuklemmen.

Das Zellkontaktiersystem kann ferner eine Abdeckungsanordnung aufweisen. Die Abdeckungsanordnung kann ausgebildet sein, auf die Vielzahl von Zellverbinderelementen aufgebracht, insbesondere aufgeschweißt oder aufgeklippst, oder aufbringbar, insbesondere aufschweißbar oder aufklippsbar, zu sein. Insbesondere kann die Abdeckungsanordnung kraftschlüssig, formschlüssig und/oder stoffschlüssig auf den Zellverbinderelementen aufgebracht oder aufbringbar sein. Die Abdeckungsanordnung kann insbesondere ausgebildet sein, auf die erste Seite der Zellverbinderelemente aufgebracht oder aufbringbar zu sein.

Die Abdeckungsanordnung kann öffnungsfrei ausgebildet sein. Anders ausgedrückt, die Abdeckungsanordnung kann derart ausgebildet sein, dass sie keine Öffnungen aufweist. Alternativ kann die Abdeckungsanordnung zwar Öffnungen aufweisen, von denen jedoch keine im Bereich der Zellverbinderelemente liegt/liegen, wenn die Abdeckungsanordnung auf den Zellverbinderelementen aufgebracht ist. Anders ausgedrückt, die Abdeckungsanordnung kann derart ausgebildet sein, dass keine ihrer etwaigen Öffnungen im Bereich der Zellverbinderelemente liegen, wenn die Abdeckungsanordnung mit den Zellverbinderelementen verbunden ist. Die Abdeckungsanordnung kann beispielsweise als Berührungsschutz dienen. Ein Berührungsschutz kann aufgrund der teilweise sehr hohen Spannungen von typischerweise mehreren 100 V, speziell bei Traktionsbatterien für elektrisch angetriebene Fahrzeuge, vorgesehen sein. Die Abdeckungsanordnung kann zwar eine oder mehrere Öffnungen aufweisen, diese sind jedoch insbesondere so klein ausgebildet, dass durch die Abdeckungsanordnung weiterhin ein Berührungsschutz bereitgestellt wird. Die eine oder mehreren Öffnungen können in diesem Fall sogar im Bereich der Zellverbinderelemente vorhanden sein, allerdings klein genug und so ausgelegt, dass der Berührungsschutz gewährleistet werden kann. Die eine oder mehreren Öffnungen können beispielsweise kleiner sein als der sogenannte Prüffinger IPXXB. Aus spritzgusstechnischen Gründen kann das Vorhandensein einer oder mehrere Öffnungen vorteilhaft oder notwendig sein, da ansonsten z. B. keine Rastnase geformt werden kann.

Zumindest in einer Teilmenge der Zellverbinderelemente kann jeweils mindestens ein Aufnahmeraum ausgebildet sein. Der Aufnahmeraum kann in einem Bereich neben dem zumindest einen Kontaktierungsbereich, beispielsweise neben einem der Kontaktelemente, gebildet sein. Der Aufnahmeraum kann in einem Bereich zwischen zwei Kontaktelementen gebildet sein.

In dem mindestens einen Aufnahmeraum kann mindestens ein Steckerelement und/oder mindestens ein Sensorelement vorgesehen oder anordenbar sein. Das mindestens eine Steckerelement kann jeweils mit einer Steuerleitung und/oder Sensorleitung verbindbar oder verbunden sein. Das mindestens eine Sensorelement kann jeweils mit einer Steuerleitung und/oder Sensorleitung verbindbar oder verbunden sein. Das mindestens eine Steckerelement und/oder das mindestens eine Sensorelement kann mit in dem Kabelkanal geführten Steuerleitungen und/oder Sensorleitungen auf einfache Weise verbunden sein/werden.

Beispielsweise kann das Zellkontaktiersystem mehrere Temperatursensoren aufweisen. Die Temperatursensoren können insbesondere über die Länge des Zellkontaktiersystems verteilt angeordnet sein. Ein jeweiliger Temperatursensor kann über jeweils einen Kontaktstecker als Beispiel für ein Steckerelement an einer Sensorleitung angeschlossen sein. Die Montage und der elektrische Anschluss der Temperatursensoren können hierdurch vereinfacht werden.

Beispielsweise kann der Temperatursensor selbst unmittelbar Kontaktstifte für die Steckkontaktierung mit einem Kontaktstecker aufweisen. Der Temperatursensor kann als Sensorelement üblicherweise ein elektronisches Bauteil beispielsweise einen sogenannten NTC-Thermistor aufweisen. Ein jeweiliger Kontaktstecker kann dabei insbesondere in einem als Steckeraufnahme dienenden Aufnahmeraum eines jeweiligen Zellverbinderelements aufgenommen und dort fixiert sein. Allgemein können zumindest einige der Zellverbinderelemente, beispielsweise alle der Zellverbinderelemente, eine derartige Steckeraufnahme aufweisen. Der Kontaktstecker kann in die Steckeraufnahme in einer Steckrichtung einführbar sein und dort fixiert und gehalten werden.

Die Temperatursensoren können wärmeleitend mit mindestens einer der Zellen in Kontakt stehen, beispielsweise über ein Zellgehäuse. Ein jeweiliger Temperatursensor kann daher auf dem Zellgehäuse aufliegen. Über zumindest einen Teil der Temperatursensoren kann eine sogenannte Hot-Spot-Temperaturmessung im Betrieb erfolgen. Die entsprechenden Temperatursensoren können hierfür angrenzend an einem Zellpol oder Zellverbinderelement positioniert sein, da dort im Bereich der Zellpole aufgrund des Stromflusses und/der von Übergangstemperaturen/-bedingungen hohe Temperaturen im Betrieb auftreten (können). Zumindest eine Teilmenge der Temperatursensoren kann jeweils als ein Cold-Spot-Temperatursensor ausgebildet sein. Anders ausgedrückt, zumindest ein weiterer Temperatursensor für eine sogenannte Cold-Spot-Temperaturmessung kann an dem Zellkontaktiersystem angebracht oder vorgesehen sein. Dieser mindestens eine Cold-Spot-Temperatursensor kann beabstandet vom Zellpol oder Zellverbinderelement angebracht sein. Durch diesen weiteren Temperatursensor kann im Betrieb eine Temperaturmessung beabstandet von einem Zellpol einer jeweiligen Zelle erfolgen. Der Temperatursensor kann im montierten Zustand in einem thermischen Kontakt mit der Zelle stehen, insbesondere mit einem Zellgehäuse.

An dem mindestens einen Steckerelement kann ein Crimpkontaktelement vorgesehen sein. Das Crimpkontaktelement kann mit einem Bonddraht verbunden sein. Eine vorhandene Steuerleitung und/oder Sensorleitung kann mittels des Bonddrahtes und durch Bonding mit einem Abgriffspunkt für die Zellspannung (Potentialabgriff) elektrisch verbunden sein/werden. Eine solche Spannungsmessung kann für jede Zelle oder jeden Zellstapel einer Batterie im Rahmen einer Batterieüberwachung und eines Batteriemanagementsystems gefordert sein/werden. Durch den Spannungsabgriff kann allgemein die Zellspannung erfasst werden.

In einer denkbaren Ausgestaltung kann der Bonddraht selbst eine Überstrom-Sicherung mit einem vorgegebenen Sicherungsnennwert ausbilden. Der Bonddraht kann daher als Sicherungselement, insbesondere als ein Schmelz-Sicherungsdraht, ausgebildet sein. Es ist in diesem Fall keine separate Sicherung erforderlich und auf eine solche kann verzichtet werden. Ein Sicherungsnennwert kann durch die Eigenschaften des Bonddrahtes definiert oder eingestellt sein/werden. Speziell können die geometrischen Eigenschaften, z. B. also die Länge und/oder die Querschnittsfläche, geeignet eingestellt sein/werden. Beispielsweise kann der Bonddraht einen Sicherungsnennwert im Bereich von 250 mA bis 5 A und insbesondere im Bereich von 750 mA bis 1,5 A aufweisen. Der Bonddraht kann Aluminium oder eine Aluminiumlegierung aufweisen oder daraus bestehen.

Bei dem Bonddraht kann sich insbesondere um einen blanken Metalldraht handeln, welcher beispielsweise unmittelbar mit dem Abgriffspunkt elektrisch durch das an sich bekannte Bonden verbunden ist. Durch das direkte Bonden ist daher kein separates Anschlusselement zum Anschließen der Sensorleitung am Abgriffspunkt für die Spannungsmessung erforderlich. Der Durchmesser des Bonddrahts kann beispielsweise im Bereich zwischen 25 µm bis 150 µm und insbesondere im Bereich von 50 µm bis 100 µm liegen. Seine Länge kann beispielsweise im Bereich von 10 mm bis 30 mm und insbesondere bei 15 mm liegen.

Der Bonddraht kann dabei mit seinem einen Ende direkt mit einem jeweiligen Zellverbinderelement kontaktiert sein/werden. Da das Zellverbinderelement beispielsweise unmittelbar an einem Zellpol der Zelle elektrisch kontaktierend anliegen kann, kann durch das Zellverbinderelement ein Spannungs-Abgriffspunkt definiert sein/werden. Beispielsweise kann der Bonddraht mit seinem anderen Ende an einem Kontaktelement, insbesondere einem Crimpkontaktelement, angeschlossen sein/werden. Insbesondere kann er an diesem ebenfalls durch Bonden angeschlossen sein/werden. Am Kontaktelement selbst kann wiederum die Steuerleitung und/oder Sensorleitung insbesondere durch Crimpen angeschlossen sein/werden. Der Bonddraht kann daher mit beiden Enden durch Bonden elektrisch kontaktiert sein/werden.

Insgesamt können hierdurch eine einfache Montage und ein einfacher Anschluss der Sensorleitung(en) mit integrierter, durch den Bonddraht ausgebildeten Sicherung, ermöglicht werden. Ein Vorteil ist, dass keine separaten Sicherungselemente, keine Leiterplatten mit Sicherungselementen usw. erforderlich und vorgesehen sind. Insgesamt ist die Spannungsmessung daher sehr einfach, kompakt und kostengünstig gehalten. Es werden herkömmliche Bauteile, insbesondere herkömmliche Crimpkontakte verwendet. Insbesondere können und werden lediglich sogenannte SMD-Bauteile verwendet, wie sie aus der Leiterplatten-Bestückung bekannt sind und die einfach und automatisiert montiert werden können.

Das Zellkontaktiersystem kann ferner mindestens einen Abstandshalter aufweisen. Der mindestens eine Abstandshalter kann an der Vielzahl von Zellverbinderelementen angebracht oder anbringbar sein. Der mindestens eine Abstandshalter kann beispielsweise angeordnet und ausgebildet sein, benachbarte Komponenten, wie z. B. benachbarte Zellverbinderelemente, auf einen/einem definierten Abstand zu halten. Dies gewährleistet eine gewünschte Formstabilität und/oder eine einfachere Handhabung.

An der Vielzahl von Zellverbinderelementen kann jeweils mindestens eine Greifergeometrie vorgesehen sein. Die Greifergeometrie kann mindestens eine Greiföffnung oder (Greif-)Aufnahme aufweisen. Die mindestens eine Greifergeometrie kann beispielsweise automatisiert von einem Fertigungsroboter gegriffen werden. Auf diese Weise kann eine verbesserte Montage erfolgen. Die Greifergeometrie kann jeweils zumindest einen Vorsprung aufweisen. Der zumindest eine Vorsprung kann bei einem Schweißvorgang mechanisch gehalten werden.

Die Vielzahl von Halterungselementen kann einen Kunststoff aufweisen oder aus einem Kunststoff gebildet sein. Der Kunststoff kann ein Thermoplast, z. B. Polycarbonat oder Polyethylenterephthalat (PET), sein. Dadurch kann das Zellkontaktiersystem besonders einfach und günstig herstellbar sein. Die Verwendung eines Kunststoffs ist einfach und spart Kosten.

Gemäß einem zweiten Aspekt wird ein Batteriesystem, insbesondere für ein Fahrzeug, vorgeschlagen. Das Batteriesystem weist mindestens einen Stapel von Batteriezellen auf. Anders ausgedrückt, das Batteriesystem weist mehrere Zellen/Batteriezellen auf. Das Batteriesystem weist mindestens ein Zellkontaktiersystem gemäß dem ersten Aspekt auf.

Die Batteriezellen können eine Batterie bilden. Die Batterie kann als eine Hochvolt-Batterie ausgebildet sein.

Das Zellkontaktiersystem dient zur elektrischen Verbindung mehrerer Zellen einer Batterie. Dabei werden die Zellen je nach Bedarf seriell und / oder parallel miteinander verschaltet, sodass die Batterie eine bestimmte Spannung und einen bestimmten Strom bereitstellt. Mehrere Zellen sind aneinandergereiht und bilden einen Zellstapel aus. Die Zellen des Zellstapels können dabei beispielsweise jeweils ein Modul der Batterie bilden. Bei entsprechend großen Batterien, z.B. für ein Fahrzeug mit elektrischem Antrieb (E-Fahrzeug), sind entsprechend viele Zellen nötig und die Batterie ist entsprechend groß. Beispielsweise weist die Batterie eine Breite und eine Länge im Bereich von 0,5 m bis 2 m auf, sodass entsprechend eine Kontaktierung der Zellen über eine größere Strecke nötig ist.

Ein solches Zellkontaktiersystem kann, wie beschrieben, Zellverbinderelemente aufweisen, die jeweils über ein zugehöriges Halterungselement aufgenommen und an einem Kabelbündel/Kabelsatz angebracht und von diesem getragen sein/werden können. Über ein solches Zellverbinderelement erfolgt jeweils eine elektrische Verbindung der Zellpole von benachbarten Zellen. Genauer gesagt erfolgt die Kontaktierung der Zellpole über zumindest einen Kontaktierungsbereich, beispielsweise über Kontaktelemente, eines solchen Zellverbinderelements. Bei der Montage wird das Zellkontaktiersystem auf einen Stapel von aneinandergereihten Zellen angebracht und die einzelnen Zellverbinderelemente werden elektrisch mit jeweils einem Zellpol einer jeweiligen Zelle kontaktiert. Dies erfolgt in der Regel durch Laserschweißen. Ein jeweiliges Zellkontaktiersystem ist häufig zumindest nahezu so groß wie der Zellstapel.

In einem Elektrofahrzeug werden mehrere Batteriezellen zu einem Zellstapel oder Batteriepaket zusammengeschaltet, um die benötigte Energiemenge zu erreichen. Ein Batteriepaket oder Zellstapel weist mehrere Batteriezellen auf, die in Reihe und/oder parallelgeschaltet sind, um die erforderliche Spannung und Kapazität zu erreichen. Dies ermöglicht es, die benötigte Energiemenge für den Antrieb und die Stromversorgung des Elektrofahrzeugs zu speichern. Eine Batteriezelle besteht aus einer Anode, einer Kathode und einem Elektrolyten, die zusammen die Energiespeicherung und -abgabe ermöglichen. Während einer Ladungsphase strömt Strom durch die Zelle und wandelt chemische Energie in elektrische Energie um, die in der Batteriezelle gespeichert wird. Während einer Entladungsphase wird die gespeicherte elektrische Energie wieder in chemische Energie umgewandelt und über den Stromkreis an den Verbraucher abgegeben.

Das Batteriesystem kann ferner ein Batteriemanagementsystem aufweisen. Das Batteriemanagementsystem kann unter anderem auch für eine Zustandsüberwachung der Batterie und der einzelnen Zellen ausgebildet sein. Hierzu können Sensorleitungen beispielsweise für Temperatur-, Druck- und/oder Spannungsmessungen zu zumindest einer Teilmenge von Zellen der Batterie geführt werden. Über das Batteriemanagementsystem kann eine Überwachung der elektrochemischen Zellen und des Zellkontaktierungssystems hinsichtlich physikalischer Messgrößen wie beispielsweise der Spannung und der Temperatur erfolgen. Hierzu können beispielsweise Potentialunterschiede zwischen verschiedenen Stromleitern gemessen und/oder Temperaturen in der Nähe der Stromleiter mittels geeigneter Temperatursensoren erfasst werden.

Mit dem Zellkontaktiersystem gemäß dem ersten Aspekt wird ein einfach herzustellendes Zellkontaktiersystem mit geringer Baugröße bereitgestellt. Dadurch kommt es zu einer (erheblichen) Vereinfachung bei der Verwendung in einem Batteriesystem gemäß dem zweiten Aspekt.

Auch wenn einige der voranstehend beschriebenen Aspekte in Bezug auf das Zellkontaktiersystem gemäß dem ersten Aspekt beschrieben wurden, so können diese Aspekte auch in entsprechender Weise in dem Batteriesystem gemäß dem zweiten Aspekt realisiert sein/werden und umgekehrt.

Die vorliegende Offenbarung soll weiter anhand von Figuren erläutert werden. Diese Figuren zeigen schematisch:
- Figur 1: eine Vorderseite eines Ausführungsbeispiels eines Zellkontaktiersystems mit einer Vielzahl von Zellverbinderelementen;
- Figur 2: eine perspektivische Darstellung einer Vorderseite und einer Rückseite des Ausführungsbeispiels eines Zellkontaktiersystems aus Figur 1;
- Figur 3: eine perspektivische Darstellung einer Vorderseite und einer Rückseite des Ausführungsbeispiels eines Zellkontaktiersystems aus Figur 1 mit einer Abdeckungsanordnung;
- Figur 4: eine perspektivische Explosionsdarstellung einer Rückseite des Ausführungsbeispiels eines Zellkontaktiersystems aus Figur 1; und
- Figur 5: eine Detailansicht einer Vorderseite des Ausführungsbeispiels eines Zellkontaktiersystems aus Figur 1.

Im Folgenden werden, ohne hierauf beschränkt zu sein, spezifische Details dargelegt, um ein vollständiges Verständnis der vorliegenden Offenbarung zu liefern. Es ist einem Fachmann jedoch klar, dass die vorliegende Offenbarung in anderen Ausführungsbeispielen verwendet werden kann, die von den nachfolgend dargelegten Details abweichen können. Beispielsweise werden im Folgenden spezifische Konfigurationen und Ausgestaltungen eines Zellkontaktiersystems beschrieben, die nicht als einschränkend anzusehen sind. Auch wenn die nachstehend beschriebenen Aspekte

in Bezug auf ein Zellkontaktiersystem beschrieben wurden, so können diese Aspekte auch in entsprechender Weise in einem Batteriesystem mit einem solchen Zellkontaktiersystem realisiert sein/werden und umgekehrt.

Zudem wird bei der folgenden Beschreibung von Ausführungsbeispielen eines Zellkontaktiersystems stets ein mit diesem Zellkontaktiersystem realisierbares Ausführungsbeispiel eines Batteriesystems mit beschrieben.

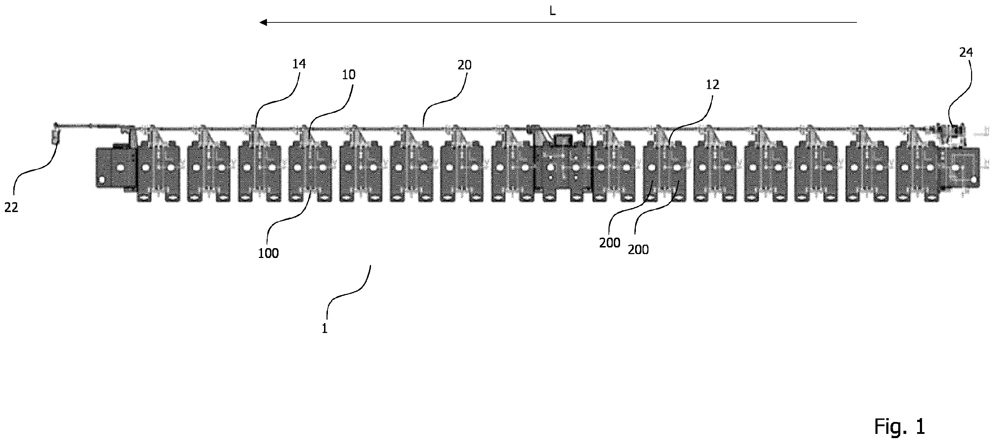

Figur 1 zeigt schematisch eine Vorderseite eines Ausführungsbeispiels eines Zellkontaktiersystems 1 mit einer Vielzahl von Zellverbinderelementen. Das Zellkontaktiersystem 1 ist für eine Batterie mit mehreren Zellen. Das Zellkontaktiersystem 1 weist eine Vielzahl von Zellverbinderelementen 100 auf. Jedes der Vielzahl von Zellverbinderelementen 100 weist zumindest einen Kontaktierungsbereich 200 auf der Rückseite auf. In dem gezeigten Ausführungsbeispiel sind, als der zumindest eine Kontaktierungsbereich, beispielhaft zumindest zwei Kontaktelemente 200 vorgesehen/angeordnet. Das Zellkontaktiersystem 1 weist eine Vielzahl von Halterungselementen 10 auf. Die Vielzahl von Halterungselementen 10 weist jeweils eine erste Verbindungsanordnung 12 und eine zweite Verbindungsanordnung 14 auf. Die erste Verbindungsanordnung 12 ist jeweils ausgebildet, ein zugehöriges Halterungselement der Vielzahl von Halterungselementen 10 mit einem zugehörigen Zellverbinderelement 100 der Vielzahl von Zellverbinderelementen 100 zu verbinden, beispielsweise lösbar zu verbinden oder lösbar mechanisch zu koppeln. Die zweite Verbindungsanordnung 14 ist jeweils ausgebildet, das zugehörige Halterungselement 10 der Vielzahl von Halterungselementen 10 mit einer oder mehreren Leitungen 20, beispielsweise lösbar, zu verbinden. Auch wenn in Figur 1 jeweils eine lösbare Verbindung zwischen den Halterungselementen 10 und einem zugehörigen Zellverbinderelement 100 und eine lösbare Verbindung der Halterungselemente 10 mit einer oder mehreren Leitungen 20 gezeigt und in Bezug darauf beschrieben wird, so sind auch nicht lösbare Ausgestaltungen jeweils denkbar.

Wie in Figur 1 zu erkennen sind entlang einer Längsachse oder Längserstreckung L der Leitungen 20, die in Figur 1 beispielhaft als ein Leitungsbündel mit mehreren Leitungen ausgebildet sind und demnach auch als Leitungsbündel 20 bezeichnet werden, mehrere Zellverbinderelemente 100 angeordnet. Ferner ist eine entsprechende Vielzahl von Halterungselementen/Halterungen 10 vorgesehen.

In der Längsrichtung L sind die Halterungselemente 10 nacheinander und/oder nebeneinander angeordnet. Die Halterungselemente 10 sind sozusagen in der Längsrichtung L aneinandergereiht. Auch wenn die meisten Halterungselemente 10 beispielhaft jeweils die gleiche Form und Größe aufweisen, können eine oder mehrere Halterungselemente 10 beispielhaft eine abweichende Form und Größe aufweisen. In einem Beispiel können alle Halterungselemente 10 eine gleiche Form und Größe aufweisen. Ebenso ist es denkbar, dass es mehrere Halterungselemente 10 mit jeweils verschiedenen Formen und/oder Größen gibt. Die Halterungselemente 10 können aus einem Kunststoff gebildet sein, beispielsweise aus einem Thermoplast, z. B. Polycarbonat oder PET.

Jedes Halterungselement 10 der Vielzahl von Halterungselemente 10 ist über ihre erste Verbindungsanordnung 12 mit einem Zellverbinderelement 100 verbunden. Die Halterungselemente 10 sind über ihre zweite Verbindungsanordnung 14 lösbar mit dem Leitungsbündel 20 verbunden. Eine Schnittstelle 22 zu einem Batteriemanagementsystem ist an einem Ende des Leitungsbündels 20 angeordnet. Ein Leiterplatte 24 ist an einem anderen Ende des Leitungsbündels 20 angeordnet. Das Leitungsbündel 20 kann eine oder mehrere Steuerleitungen und/oder eine oder mehrere Sensorleitungen aufweisen.

Die Halterungselemente 10 können flexibel auf die jeweiligen Zellverbinderelemente 100 montiert, beispielsweise kraftschlüssig, formschlüssig und/oder stoffschlüssig auf die Zellverbinderelemente montiert, beispielsweise gesteckt oder geklippst oder heißverstemmt, werden. Ferner können die Halterungselemente 10 beliebig, z. B. in beliebigen Abständen und/oder Anordnung, über Verbindung mit dem Leitungsbündel 20 aneinandergereiht sein/werden. Auf diese Weise können die Zellverbinderelemente 100 beliebig, z. B. in beliebigen Abständen und/oder Anordnung, aneinandergereiht sein/werden. Die Halterungselemente 10 können unterschiedliche Geometrie(n) und/oder Funktionen und/oder Formen haben. Ein großer Trägerrahmen, dessen fixe Größe auf die Batterie abgestimmt ist, ist nicht nötig und nicht vorgesehen. Ferner kann auf große Werkzeuge und/oder große Spritzgussmaschinen verzichtet werden. Stattdessen wird ein flexibles und/oder modulares und/oder beliebig erweiterbares Zellkontaktiersystem 1 zur einfachen Variantensteuerung bereitgestellt. Wie in Figur 1 zu erkennen, ist das Leitungsbündel 20 das Bindeglied oder tragende Element des Zusammenbaus aus Zellverbinderelementen 100. Dies vereinfacht und/oder flexibilisiert den Aufbau.

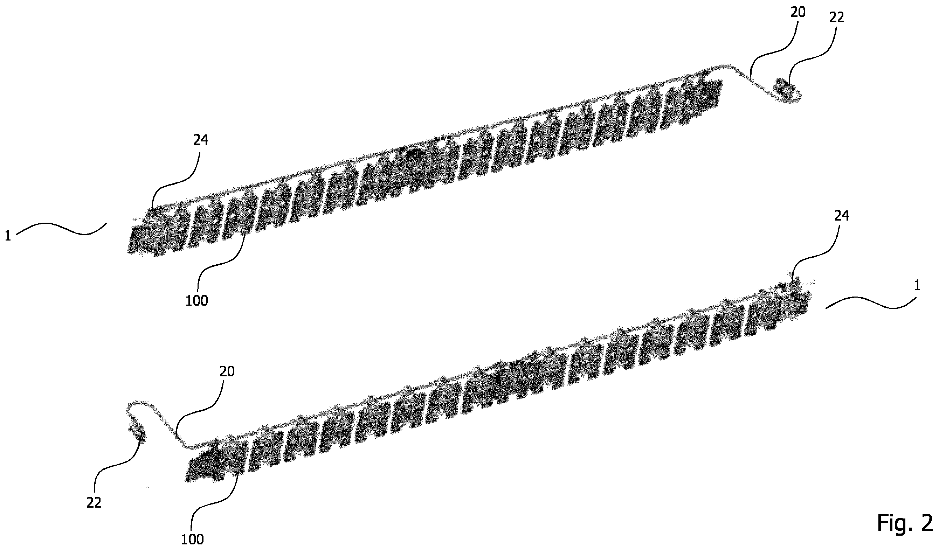

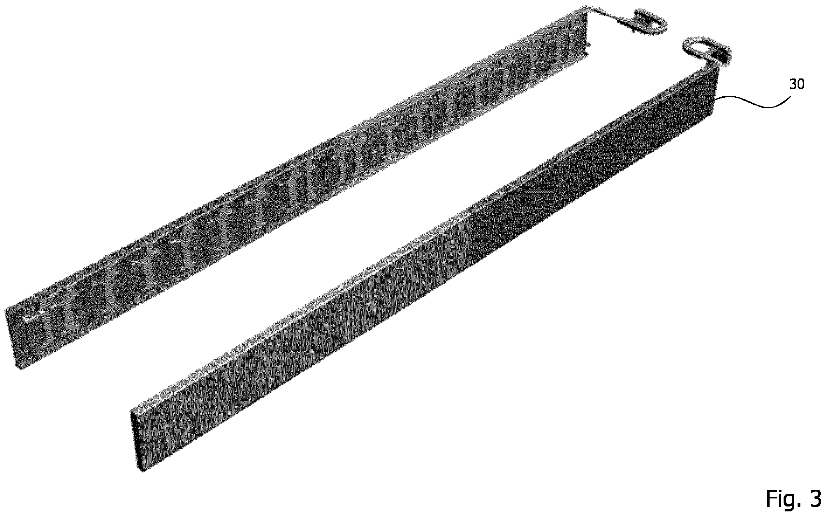

Figur 2 zeigt eine perspektivische Darstellung einer Vorderseite (unten in Figur 2) und einer Rückseite (oben in Figur 2) des Ausführungsbeispiels eines Zellkontaktiersystems aus Figur 1. Figur 3 zeigt eine perspektivische Darstellung einer Vorderseite (unten in Figur 3) und einer Rückseite (oben in Figur 3) einer Variante des Ausführungsbeispiels eines Zellkontaktiersystems aus Figur 1 mit einer Abdeckungsanordnung 30. Die Abdeckungsanordnung 30 ist auf die Vielzahl von Zellverbinderelementen 100 aufgebracht, insbesondere aufgeschweißt oder aufgeklippst, oder aufbringbar, insbesondere aufschweißbar oder aufklippsbar. Die Abdeckungsanordnung 30 ist beispielhaft öffnungsfrei ausgebildet und bildet einen Berührungsschutz. Die Zellverbinderelemente 100 sind in diesem Fall von der Vorderseite nicht berührbar, da durch die Abdeckungsanordnung 30 geschützt oder abgedeckt.

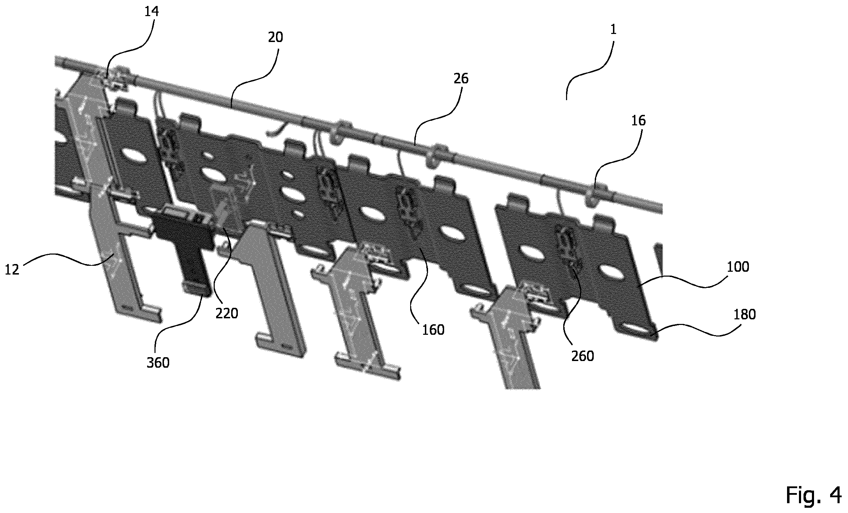

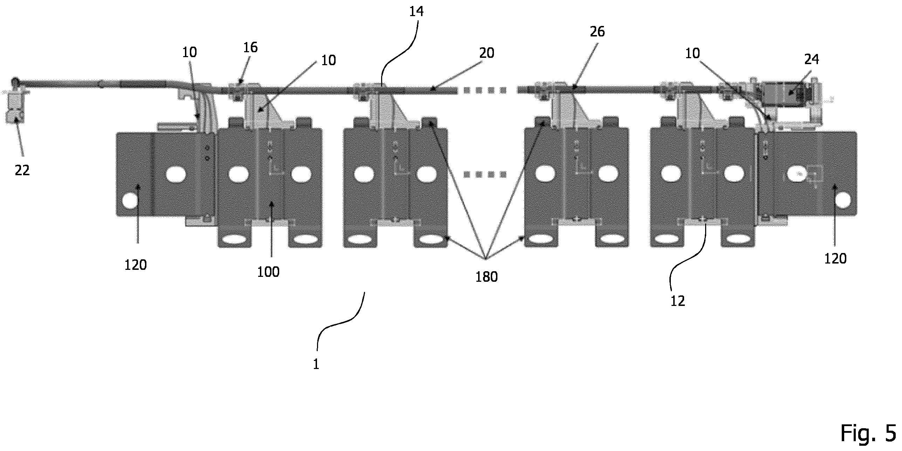

Weitere Details des Zellkontaktiersystems 1 werden nun in Bezug auf Figuren 4 und 5 beschrieben.

Figur 4 zeigt eine perspektivische Explosionsdarstellung einer Rückseite des Ausführungsbeispiels eines Zellkontaktiersystems aus Figur 1. In Figur 3 ist insbesondere zu erkennen, wie die Halterungen 10 mit den Zellverbinderelementen 100 verbunden werden können. Die erste Verbindungsanordnung 12 kann auf das zugehörige Zellverbinderelement 100 gesteckt oder geklippst oder mit dem zugehörigen Zellverbinderelement 100 heißverstemmt werden. Über die erste Verbindungsanordnung 12 kann somit eine Halterung 10 mit einem der Zellverbinderelemente 100 lösbar mechanisch gekoppelt oder verbunden werden.

Die erste Verbindungsanordnung 12 kann somit das zugehörige Halterungselement 10 der Vielzahl von Halterungselementen 10 mit einer ersten Seite des zugehörigen Zellverbinderelements 100 der Vielzahl von Zellverbinderelementen 100 lösbar verbinden. Die erste Seite liegt einer zweiten Seite gegenüber, auf welcher die zwei Kontaktelemente 200 des zugehörigen Zellverbinderelements 100 angeordnet sind. In dem Ausführungsbeispiel ist die erste Seite die Rückseite und die zweite Seite die Vorderseite des Zellkontaktiersystems 1.

Das Zellkontaktiersystem 1 weist eine Vielzahl von Zellverbinderelementen 100 auf. Jedes der Vielzahl von Zellverbinderelementen 100 weist zumindest zwei Kontaktelemente 200 auf. In dem Ausschnitt des Zellkontaktiersystems 1 aus Figuren 4 und 5 weist beispielhaft jedes Zellverbinderelement 100 genau zwei Kontaktelemente 200 auf. Es können auch mehr als zwei Kontaktelemente 200 pro Zellverbinderelement 100 vorgesehen sein. Die Kontaktelemente 200 sind in Figur 5 zu erkennen. Die Kontaktelemente befinden sich in dem Ausführungsbeispiel auf einer gegenüberliegenden Seite zu/von der Seite, an der die Halterungselemente 10 angebracht sind.

Wie in Figur 4 zu erkennen wird zur Verbindung des zugehörigen Halterungselements 10 mit dem Leitungsbündel 20 die zweite Verbindungsanordnung 14 in das Leitungsbündel 20 eingehängt oder auf das Leitungsbündel aufgehängt oder aufgeklemmt. Zur weiteren Sicherung der Halterungen 10 an dem Leitungsbündel können schlaufenförmige Elemente 16, die im einfachsten Fall als Kabelbinder oder kabelbinderartige Elemente ausgestaltet sein können, um die zweite Verbindungsanordnung 14 und den jeweiligen Abschnitt des Leitungsbündels 20 angeordnet. An den Abschnitten, an denen die zweite Verbindungsanordnung 14 mit dem Leitungsbündel 20 verbunden sind, ist ferner optional ein schützendes Band 26 um das Leitungsbündel 20 gewickelt. Das Band 26 dient als eine Art Scheuerschutz des Leitungsbündels 20 und somit als Schutz vor Abnutzung der Isolierung des Leitungsbündels 20. Durch Anbringung / Befestigung der Halterungselemente 10 an dem Leitungsbündel 20 fungiert das Leitungsbündel 20 als eine Art Träger. Die Befestigung der Halterungselemente 10 an dem Leitungsbündel 20 kann jeweils über einen Haltearm oder einen Haltehaken oder ähnliches der Halterungselemente 10 mit dem Leitungsbündel 20 erfolgen. Durch Anbringung der Zellerbinderelemente 100 über die Halterungselemente 10 an dem Leitungsbündel werden die Zellverbinderelemente 100 durch das Leitungsbündel 20 getragen und es kann auf aufwändige und/oder große und/oder komplexe Träger oder Trägersysteme für die Zellverbinderelemente 100 verzichtet werden.

Zumindest in einer Teilmenge der Zellverbinderelemente 100 ist jeweils mindestens ein Aufnahmeraum 160 ausgebildet. Der Aufnahmeraum 160 ist in Figuren 4 und 5 jeweils gebildet durch eine Vertiefung oder Ausnehmung in dem jeweiligen Zellverbinderelement 100 und der zugehörigen Halterung 10. In dem mindestens einen Aufnahmeraum 160 ist in Figur 4 ein Steckerelement 260 angeordnet. Zusätzlich oder alternativ können Sensorelemente 360 in den Aufnahmeräumen 160 vorgesehen oder anordenbar sein.

Das Zellkontaktiersystem 1 weist ferner mindestens einen Abstandshalter 220 auf. Der Abstandshalter 200 ist an der Vielzahl von Zellverbinderelementen 100 angebracht oder anbringbar. Auch wenn nur ein Abstandshalter 220 beispielhaft in Figur 3 gezeigt ist, können mehrere Abstandshalter 200 an den Zellverbinderelementen 100 angeordnet sein. Der/die Abstandshalter sind in dem Ausführungsbeispiel an der Seite angeordnet, an welcher die Halterungselemente 10 und/oder die Steckerelemente 160 und/oder die Sensorelemente 360 vorgesehen sind.

An der Vielzahl von Zellverbinderelementen 100 ist jeweils mindestens eine Greifergeometrie 180 vorgesehen. Beispielhaft sind vier Greifergeometrien 180 an jedem Zellverbinderelement 100 vorgesehen, von denen jeweils zwei nach oben und jeweils zwei nach unten vorstehen.

Die Zellverbinderelemente 100 weisen somit, wie in Figuren 4 und 5 beispielhaft zu erkennen, jeweils mehrere Vorsprünge 180 als Greifergeometrien 180, insbesondere Laschen, auf, so dass in dem gezeigten Beispiel sowohl die Vorsprünge als auch die Greifergeometrien mit dem Bezugszeichen 180 bezeichnet werden (da sie sich entsprechen). Die in den Figuren zu erkennenden Zellverbinderelemente 100 weisen jeweils beispielhaft genau vier Vorsprünge 180 auf. Zwei Vorsprünge 180 stehen nach oben von dem jeweiligen Zellverbinderelement 100 weg und zwei Vorsprünge 180 stehen nach unten von dem jeweiligen Zellverbinderelement 100 weg. Die Greifergeometrien 180 dienen zur automatisierten Zu- und Entnahme des Zellkontaktiersystems 1 beispielsweise aus Transportbehältern. Dies verbessert und vereinfacht die Fertigung.

Die Halterungen 10 können verschiedenen Funktionen erfüllen, insbesondere als Abdeckung dienen für Steckerelemente und beispielsweise an Steckerelementen vorgesehene Bonddrähte. Die Halterungselemente 10 können dienen zur Zugentlastung mittels einer Schnittstelle zur Anbindung an das Leitungsbündel 20. Die Halterungen 10 können dazu dienen, die Zellverbinderelemente zu halten und zu tragen. Die Halterungen 10 können so konzipiert sein/werden, dass sie gleiche Schnittstellen oder Aufnahmen für verschiedene Geometrien und/oder Größen und/oder Varianten von Zellverbinderelementen 100 haben. Dadurch wird eine Variantensteuerung mit möglichst vielen COP-Teilen (COP: Carry Over Part) ermöglicht.

Die Zellverbinderelemente 100 können über ihre Greifergeomtrie(n) 180 einzeln gleichzeitig gegriffen und positioniert werden. Dadurch wird es möglich, bedingt von der Flexibilität des Leitungssatzes Toleranzen in allen drei Raum-Achsen (x-,y-, z-Richtung) zu kompensieren.

In Figur 5 wird abschließend eine Detailansicht einer Vorderseite des Ausführungsbeispiels eines Zellkontaktiersystems aus Figur 1 gezeigt. Die obigen Erläuterungen nehmen entsprechend Bezug auf Figur 5.

Weitere optionale Details der Zellverbinderelemente 100 sind in den Figuren 4 und 5 zu erkennen. Die Zellverbinderelemente 100 bilden jeweils einen Aufnahmeraum 160 für ein Steckerelement 260 aus. Ein Aufnahmeraum 160 ist in dem gezeigten Beispiel dadurch gebildet, dass ein Bereich zwischen den Kontaktelementen 200 gegenüber den Kontaktelementen nach vorne gewölbt ist. Figur 4 zeigt diesbezüglich eine Rückseite der Zellverbinderelemente 100, auf denen die Kontaktelemente 200 ausgebildet sind. Figur 5 zeigt eine Vorderseite der Zellverbinderelemente 100. In Bezug auf die Vorderseite ist der Bereich zwischen den Kontaktelementen 200 nach vorne ausgeformt oder gewölbt und bildet dadurch einen Aufnahmeraum 160 aus. In dem Aufnahmeraum 160 ist ein Steckerelement 260 aufgenommen und angeordnet. In Figur 4 ist ferner ein Zellverbinderelement 100 gezeigt, welches ebenfalls zwischen den Kontaktelementen 200 einen Aufnahmeraum 160 ausbildet. In diesem Aufnahmeraum 160 könnte ebenso ein Steckerelement 260 angeordnet werden, beispielhaft ist in diesem jedoch ein Sensorelement 360 angeordnet. Das Sensorelement 360 ist beispielhaft als ein Cold-Spot-Element ausgebildet. An diesem mittleren Zellverbinderelement 100 ist für die Aufnahme weiterer Steckerelemente 260, wie in Figur 4 beispielhaft zu erkennen, ein weiterer Aufnahmeraum auf der linken Seite ausgebildet, welches zwar nicht zwischen zwei Kontaktelementen 200 aber angrenzend oder benachbart zu einem Kontaktelement 200 vorgesehen ist.

Das mindestens eine Steckerelement 260 kann jeweils mit einer Steuerleitung und/oder Sensorleitung verbindbar oder verbunden sein, die in dem Leiterbündel 20 vorhanden sein kann/können. Das Sensorelement 360 kann jeweils mit einer Steuerleitung und/oder Sensorleitung verbindbar oder verbunden sein, die in dem Leiterbündel 20 vorhanden sein kann/können. Die Steuerleitung und/oder Sensorleitung kann/können in dem oben beschriebenen Steuerbündel 20 verlaufen. Mit dem Leitungsbündel 20 kann/können die Leiterplatte 24 und/oder die Schnittstelle 22 verbunden sein, welche zu einem Batteriemanagementsystem führen und mit einem solchen verbunden sein kann.

Alle in Bezug auf die Figuren 1 bis 5 beschriebenen Details sind auf geeignete Weise miteinander kombinierbar.

## Patentansprüche

1. Zellkontaktiersystem (1) für eine Batterie mit mehreren Zellen, wobei das Zellkontaktiersystem (1) aufweist:
eine Vielzahl von Zellverbinderelementen (100), wobei jedes der Vielzahl von Zellverbinderelementen (100) zumindest einen Kontaktierungsbereich (200) aufweist; und
eine Vielzahl von Halterungselementen (10), wobei die Vielzahl von Halterungselementen (10) jeweils aufweist:
eine erste Verbindungsanordnung (12), die jeweils ausgebildet ist, ein zugehöriges Halterungselement (10) der Vielzahl von Halterungselementen (10) mit einem zugehörigen Zellverbinderelement (100) der Vielzahl von Zellverbinderelementen (100) zu verbinden, und
eine zweite Verbindungsanordnung (14), die jeweils ausgebildet ist, das zugehörige Halterungselement (10) der Vielzahl von Halterungselementen (10) mit mindestens einer Leitung (20), insbesondere einem Leitungsbündel, zu verbinden.

2. Zellkontaktiersystem (1) nach Anspruch 1, wobei die erste Verbindungsanordnung (12) jeweils ausgebildet ist, ein zugehöriges Halterungselement (10) der Vielzahl von Halterungselementen (10) mit einem zugehörigen Zellverbinderelement (100) der Vielzahl von Zellverbinderelementen (100) lösbar zu verbinden.

3. Zellkontaktiersystem (1) nach Anspruch 1 oder 2, wobei die zweite Verbindungsanordnung (14) jeweils ausgebildet ist, das zugehörige Halterungselement (10) der Vielzahl von Halterungselementen (10) mit mindestens einer Leitung (20), insbesondere einem Leitungsbündel, lösbar zu verbinden.

4. Zellkontaktiersystem (1) nach einem der Ansprüche 1 bis 3, wobei die erste Verbindungsanordnung (12) ausgebildet ist, auf das zugehörige Zellverbinderelement (100) kraftschlüssig, formschlüssig und/oder stoffschlüssig aufgebracht, beispielsweise gesteckt oder geklippst oder mit dem zugehörigen Zellverbinderelement (100) heißverstemmt, zu werden.

5. Zellkontaktiersystem (1) nach einem der Ansprüche 1 bis 4, wobei die erste Verbindungsanordnung (12) ausgebildet ist, das zugehörige Halterungselement (10) der Vielzahl von Halterungselementen (10) mit einer ersten Seite des zugehörigen Zellverbinderelements (100) der Vielzahl von Zellverbinderelementen (100) lösbar zu verbinden, die einer zweiten Seite gegenüberliegt, auf welcher der zumindest eine Kontaktierungsbereich (200) des zugehörigen Zellverbinderelements (100) angeordnet ist.

6. Zellkontaktiersystem (1) nach einem der Ansprüche 1 bis 5, wobei die zweite Verbindungsanordnung (14) jeweils ausgebildet ist, zur Verbindung des zugehörigen Halterungselements (10) mit der mindestens einen Leitung (20) das zugehörige Halterungselement (10) in die mindestens eine Leitung (20) einzuhängen oder einzufädeln oder auf die mindestens eine Leitung (20) aufzuklippsen oder aufzuhängen oder aufzuklemmen.

7. Zellkontaktiersystem (1) nach einem der Ansprüche 1 bis 6, wobei das Zellkontaktiersystem (1) ferner eine Abdeckungsanordnung (30) aufweist, die ausgebildet ist, auf die Vielzahl von Zellverbinderelementen (100) aufgebracht zu sein oder zu werden, insbesondere kraftschlüssig, formschlüssig und/der stoffschlüssig aufgebracht zu sein oder zu werden, beispielsweise aufgeschweißt oder aufgeklippst zu sein oder zu werden.

8. Zellkontaktiersystem (1) nach Anspruch 7, wobei die Abdeckungsanordnung (30) öffnungsfrei ausgebildet ist.

9. Zellkontaktiersystem (1) nach einem der Ansprüche 1 bis 8, wobei zumindest in einer Teilmenge der Zellverbinderelemente (100) jeweils mindestens ein Aufnahmeraum (160) ausgebildet ist.

10. Zellkontaktiersystem (1) nach Anspruch 9, wobei in dem mindestens einen Aufnahmeraum (160) mindestens ein Steckerelement (260) und/oder mindestens ein Sensorelement (360) vorgesehen oder anordenbar ist.

11. Zellkontaktiersystem (1) nach einem der Ansprüche 1 bis 10, wobei das Zellkontaktiersystem (1) ferner mindestens einen Abstandshalter (220) aufweist, der an der Vielzahl von Zellverbinderelementen (100) angebracht oder anbringbar ist.

12. Zellkontaktiersystem (1) nach einem der Ansprüche 1 bis 11, wobei an der Vielzahl von Zellverbinderelementen (100) jeweils mindestens eine Greifergeometrie (180) vorgesehen ist.

13. Zellkontaktiersystem (1) nach einem der Ansprüche 1 bis 12, wobei die Vielzahl von Halterungselementen (10) einen Kunststoff aufweist oder aus einem Kunststoff gebildet ist, insbesondere aus einem Thermoplast, z. B. Polycarbonat oder Polyethylenterephthalat, PET.

14. Batteriesystem aufweisend:
mindestens einen Stapel von Batteriezellen; und
mindestens ein Zellkontaktiersystem (1) nach einem der Ansprüche 1 bis 13.
